# EUROPEAN PATENT APPLICATION

(11) **EP 4 827 011 A1**
(43) Date of publication of application: **21.10.2026**
(21) Application number: 24918363.3
(22) Date of filing: 28.12.2024
(51) Int. Cl.: H04B 7/185

(54) **COMMUNICATION METHOD, COMMUNICATION APPARATUS AND COMMUNICATION SYSTEM**

(30) Priority: 15.01.2024 CN 202410054547
(71) Applicant: Huawei Technologies Co., Ltd., Shenzhen, Guangdong 518129 (CN)
(72) Inventor: KONG, Chuili, Shenzhen, Guangdong 518129 (CN); LUO, Hejia, Shenzhen, Guangdong 518129 (CN); WANG, Yu, Shenzhen, Guangdong 518129 (CN); WANG, Jun, Shenzhen, Guangdong 518129 (CN)
(74) Representative: Goddar, Heinz J.
(86) International application number: PCT/CN2024/143542
(87) International publication number: WO 2025/152755

(57) **Abstract**

A communication method, a communication apparatus, and a communication system are provided, and are applied to the field of communication technologies. The method includes: A first satellite sends a first broadcast message, and correspondingly, a terminal apparatus receives the first broadcast message, where the first broadcast message includes first indication information, and the first indication information indicates ephemeris information of a second satellite. The terminal apparatus receives a second broadcast message from the second satellite based on the first indication information. According to embodiments of this application, time required for the terminal apparatus to acquire a satellite can be reduced.

## Description

This application claims priority to Chinese Patent Application No. 202410054547.3, filed with the China National Intellectual Property Administration on January 15, 2024, and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

In a non-terrestrial network (non-terrestrial network, NTN) system, a satellite may send synchronization signal blocks (synchronization signal block, SSB) in a manner of beam sweeping. A terminal device needs to scan, on a plurality of frequencies and in a plurality of beam directions, the SSBs sent by the satellite, so as to access the satellite. For a single frequency, the terminal device needs to scan, in the beam directions, the SSBs sent by the satellite, and time required for the terminal device to search for the single frequency is determined by an SSB sweeping periodicity and a quantity of beams required for the terminal device to complete scanning. If the terminal device needs to scan a plurality of frequencies, time for the terminal device to acquire the satellite is directly proportional to a quantity of frequencies to be scanned.

However, in the foregoing method for accessing the satellite by the terminal device, it takes a long time for the terminal device to acquire the satellite.

### SUMMARY

Embodiments of this application provide a communication method, a communication apparatus, and a communication system, to reduce satellite acquisition time for a terminal device.

According to a first aspect, an embodiment of this application provides a communication method, applied to a terminal apparatus. It may be understood that the terminal apparatus may include a terminal device or a chip (system) or a circuit used in the terminal device. This is not limited in this application. The method includes:
receiving a first broadcast message from a first satellite, where the first broadcast message includes first indication information, and the first indication information indicates ephemeris information of a second satellite; and receiving a second broadcast message from the second satellite based on the first indication information.

In embodiments of this application, a coverage range of the first satellite is greater than a coverage range of the second satellite. Alternatively, an orbital altitude of the first satellite is higher than an orbital altitude of the second satellite. The first satellite may also be referred to as a high-orbit satellite, and the second satellite may also be referred to as a low-orbit satellite. The second satellite may be located within the coverage range of the first satellite. The first satellite may broadcast the ephemeris information of the second satellite, so that the terminal device can obtain the ephemeris information of the second satellite, and adjust a direction of a receive beam based on the ephemeris information of the second satellite, to point the receive beam to the second satellite. The terminal device does not need to perform beam scanning, and satellite acquisition time of the terminal device can be effectively reduced, enabling the terminal device to quickly access the second satellite.

According to a second aspect, an embodiment of this application provides a communication method, applied to a first satellite. It may be understood that the method may be performed by the first satellite, or may be performed by a chip (system) or a circuit used in the first satellite. This is not limited in this application. The method includes:
obtaining ephemeris information of a second satellite; and sending a first broadcast message, where the first broadcast message includes first indication information, and the first indication information indicates the ephemeris information of the second satellite.

With reference to the second aspect, in a possible implementation, the obtaining the ephemeris information of the second satellite includes:
receiving first information from the second satellite, where the first information includes ephemeris information of the second satellite.

With reference to the second aspect, in a possible implementation, the first information further includes at least one of the following: synchronization signal block SSB information of the second satellite, a coverage range of the second satellite, and a load status of the second satellite.

With reference to the first aspect or the second aspect, in a possible implementation, the first broadcast message further includes at least one of the following: the SSB information of the second satellite, second indication information, or third indication information, where the second indication information indicates the coverage range of the second satellite, and the third indication information indicates the load status of the second satellite.

In this embodiment of this application, the first satellite further broadcasts the SSB information of the second satellite, so that the terminal device can obtain the SSB information (for example, an SSB center frequency or SSB time domain information) of the second satellite, and the terminal device can receive an SSB of the second satellite on a fixed frequency channel number without performing frequency scanning, thereby reducing time for the terminal device to acquire the second satellite. Alternatively, the first satellite further broadcasts the coverage range of the second satellite, so that the terminal device can determine whether the terminal device is located within the coverage range of the second satellite, and the terminal device accesses the second satellite more quickly, thereby greatly reducing satellite acquisition time for the terminal device. Alternatively, the first satellite further broadcasts the load status of the second satellite, so that the terminal device can select a more appropriate second satellite based on the load status, thereby ensuring load balancing between satellites, avoiding long time for subsequent access caused by congestion, and ensuring that the second satellite can provide a better access service for the terminal device.

With reference to the first aspect or the second aspect, in a possible implementation, the second indication information indicates latitude and longitude corresponding to the coverage range of the second satellite.

In this embodiment of this application, the second indication information indicates the latitude and the longitude corresponding to the coverage range of the second satellite, so that the terminal device can quickly determine the coverage range of the second satellite based on the latitude and the longitude.

With reference to the first aspect or the second aspect, in a possible implementation, the second indication information indicates an identifier of a geographical area corresponding to the coverage range of the second satellite.

In this embodiment of this application, a global geographical area may be divided into a plurality of geographical areas, and the plurality of geographical areas are numbered, to obtain an identifier of each geographical area. A coverage area of the second satellite can be accurately indicated based on the identifier of the geographical area corresponding to the coverage range of the second satellite.

With reference to the first aspect or the second aspect, in a possible implementation, the second indication information indicates a value range of an included angle formed between a beam emitted by the second satellite and a plane defined by an antenna panel of the second satellite.

In this embodiment of this application, the beam emitted by the second satellite may be received within the coverage range of the second satellite. Therefore, the coverage range of the second satellite may be indicated based on the value range of the included angle formed between the beam emitted by the second satellite and the plane defined by the antenna panel of the second satellite. The terminal device can accurately determine the coverage range of the second satellite based on the value range of the included angle formed between the beam emitted by the second satellite and the plane defined by the antenna panel of the second satellite.

With reference to the first aspect or the second aspect, in a possible implementation, the third indication information includes a quantity of users currently connected to the second satellite and/or a ratio of the quantity of users currently connected to the second satellite to a quantity of users allowed to be connected to the second satellite.

In this embodiment of this application, the load status of the second satellite can be intuitively reflected based on the quantity of users currently connected to the second satellite or the ratio of the quantity of users currently connected to the second satellite to the quantity of users allowed to be connected to the second satellite.

With reference to the first aspect or the second aspect, in a possible implementation, the SSB information includes at least one of the following information of the second satellite: an SSB center frequency, a subcarrier spacing (subcarrier spacing, SCS), a system frame number (system frame number, SFN) offset, an SSB sending periodicity, SSB time domain information, and a half-frame index.

In this embodiment of this application, the SCS, the SFN offset, the SSB sending periodicity, the SSB time domain information, the half-frame index, and the like may be used to determine an SSB time domain position of the second satellite, so that the terminal device may monitor a broadcast signal of the second satellite only at the SSB time domain position of the second satellite (for example, when the second satellite sends an SSB), and may not monitor the broadcast signal of the second satellite at another time, thereby reducing power consumption of the terminal device. The SSB information includes the SSB center frequency, so that the terminal device can receive the SSB of the second satellite on the fixed frequency channel number without performing frequency scanning, thereby reducing the time for the terminal device to acquire the second satellite.

With reference to the first aspect or the second aspect, in a possible implementation, the first indication information includes ephemeris information of the first satellite and an offset of an ephemeris of the second satellite relative to an ephemeris of the first satellite.

With reference to the first aspect or the second aspect, in a possible implementation, the first broadcast message further includes fourth indication information, and the fourth indication information indicates that the first broadcast message further includes access information of the first satellite.

In this embodiment of this application, the first broadcast message further includes the access information of the first satellite, so that the terminal device can access the first satellite. For example, after the terminal device fails to access the second satellite, the terminal device may access the first satellite based on the access information of the first satellite.

With reference to the first aspect or the second aspect, in a possible implementation, the first indication information indicates ephemeris information of a plurality of satellites, and the second satellite is one of the plurality of satellites that is closer to the terminal device, or the second satellite is one of the plurality of satellites that has a distance to the terminal device less than or equal to a distance threshold.

In this embodiment of this application, the second satellite that meets a condition is selected from the plurality of satellites based on distances between the plurality of satellites and the terminal device, to ensure that the second satellite provides a better access service for the terminal device.

With reference to the first aspect or the second aspect, in a possible implementation, the first indication information indicates ephemeris information of a plurality of satellites, and the second satellite is one of the plurality of satellites that has longer service duration, or the second satellite is one of the plurality of satellites that has service duration greater than or equal to a time threshold.

In this embodiment of this application, the terminal device may select, from the plurality of satellites, the second satellite whose service duration meets a condition, so that the terminal device can be prevented from frequently switching between service satellites, and the second satellite can provide a better access service for the terminal device.

With reference to the first aspect or the second aspect, in a possible implementation, the first indication information indicates ephemeris information of a plurality of satellites, and the second satellite is one of the plurality of satellites that has higher signal quality, or the second satellite is one of the plurality of satellites that has signal quality greater than or equal to a signal quality threshold.

In this embodiment of this application, the terminal device may select, from the plurality of satellites, the second satellite whose signal quality meets a requirement, to ensure quality of service of an access service provided by the second satellite for the terminal device.

According to a third aspect, an embodiment of this application provides a communication method, applied to a second satellite. It may be understood that the method may be performed by the second satellite, or may be performed by a chip (system) or a circuit used in the second satellite. This is not limited in this application. The method includes:
sending first information to a first satellite, where the first information includes ephemeris information of a second satellite; and sending a second broadcast message.

In this embodiment of this application, the second satellite may send the ephemeris information of the second satellite to the first satellite, so that the first satellite can broadcast the ephemeris information of the second satellite.

With reference to the third aspect, in a possible implementation, the first information further includes at least one of the following: synchronization signal block SSB information of the second satellite, a coverage range of the second satellite, and a load status of the second satellite.

In this embodiment of this application, the second satellite further sends the SSB information, the coverage range of the second satellite, or the load status of the second satellite to the first satellite, so that the first satellite can broadcast the SSB information, the coverage range of the second satellite, or the load status of the second satellite, to assist a terminal device in acquiring the second satellite, thereby shortening time for the terminal device to acquire the second satellite.

According to a fourth aspect, an embodiment of this application provides a communication apparatus, configured to perform the method according to any one of the first aspect or the possible implementations of the first aspect. The communication apparatus includes a unit that performs the method according to any one of the first aspect or the possible implementations of the first aspect.

According to a fifth aspect, an embodiment of this application provides a communication apparatus, configured to perform the method according to any one of the second aspect or the possible implementations of the second aspect. The communication apparatus includes a unit that performs the method according to any one of the second aspect or the possible implementations of the second aspect.

According to a sixth aspect, an embodiment of this application provides a communication apparatus, configured to perform the method according to any one of the third aspect or the possible implementations of the third aspect. The communication apparatus includes a unit that performs the method according to any one of the third aspect or the possible implementations of the third aspect.

In the fourth aspect, the fifth aspect, or the sixth aspect, the communication apparatus may include a transceiver unit and a processing unit. For detailed descriptions of the transceiver unit and the processing unit, refer to the following apparatus embodiments.

According to a seventh aspect, an embodiment of this application provides a communication apparatus. The communication apparatus includes a processor, configured to perform the method according to any one of the first aspect to the third aspect or the possible implementations of the first aspect to the third aspect. Alternatively, the processor is configured to execute a program stored in a memory. When the program is executed, the method according to any one of the first aspect to the third aspect or the possible implementations of the first aspect to the third aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to an eighth aspect, an embodiment of this application provides a communication apparatus. The communication apparatus includes a logic circuit and an interface. The logic circuit is coupled to the interface. The interface is configured to input a first broadcast message. The logic circuit is configured to input a second broadcast message through the interface based on first indication information.

It may be understood that for the communication apparatus according to the eighth aspect, refer to the first aspect or the following specific implementations.

According to a ninth aspect, an embodiment of this application provides a communication apparatus. The communication apparatus includes a logic circuit and an interface. The logic circuit is coupled to the interface. The logic circuit is configured to obtain ephemeris information of a second satellite. The interface is configured to output a first broadcast message.

It may be understood that for the communication apparatus according to the ninth aspect, refer to the second aspect or the following specific implementations.

According to a tenth aspect, an embodiment of this application provides a communication apparatus. The communication apparatus includes a logic circuit and an interface. The logic circuit is coupled to the interface. The interface is configured to output first information and a second broadcast message.

It may be understood that for the communication apparatus according to the tenth aspect, refer to the third aspect or the following specific implementations.

According to an eleventh aspect, an embodiment of this application provides a computer-readable storage medium. The computer-readable storage medium is configured to store a computer program. When the computer program is run on a computer, the method according to any one of the first aspect to the third aspect or the possible implementations of the first aspect to the third aspect is performed.

According to a twelfth aspect, an embodiment of this application provides a computer program product. The computer program product includes a computer program. When the computer program is run on a computer, the method according to any one of the first aspect to the third aspect or the possible implementations of the first aspect to the third aspect is performed.

According to a thirteenth aspect, an embodiment of this application provides a computer program. When the computer program is run on a computer, the method according to any one of the first aspect to the third aspect or the possible implementations of the first aspect to the third aspect is performed.

According to a fourteenth aspect, an embodiment of this application provides a communication system. The communication system includes at least two of the following: a terminal device, a first satellite, and a second satellite. The terminal device is configured to perform the method according to any one of the first aspect or the possible implementations of the first aspect. The first satellite is configured to perform the method according to any one of the second aspect or the possible implementations of the second aspect. The second satellite is configured to perform the method according to any one of the third aspect or the possible implementations of the third aspect.

### BRIEF DESCRIPTION OF DRAWINGS

The following describes accompanying drawings in embodiments of this application.
FIG. 1A is a diagram of an architecture of a communication system according to an embodiment of this application;
FIG. 1B is a diagram of an architecture of another communication system according to an embodiment of this application;
FIG. 1C is a diagram of an architecture of still another communication system according to an embodiment of this application;
FIG. 2 is a diagram of beam sweeping according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a diagram of a coverage range of a second satellite according to an embodiment of this application;
FIG. 7 is a schematic flowchart of still another communication method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

### DESCRIPTION OF EMBODIMENTS

The terms "first", "second", and the like in the specification, claims, and accompanying drawings of this application are merely used to distinguish between different objects, and are not used to limit a sequence, a time sequence, a priority, or an importance degree of a plurality of objects. In embodiments of this application, ''a plurality of'' means two or more. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices. In addition, the character "/" generally indicates an "or" relationship between the associated objects.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

With development of information technologies, modern communication systems impose more urgent requirements on communication efficiency, mobility, diversity, and the like. Currently, in some important application scenarios, for example, in the fields of space communication, aviation communication, maritime communication, military communication, and the like, non-terrestrial network (non-terrestrial network, NTN) communication, represented by a non-terrestrial device such as a satellite, an uncrewed aerial vehicle, and a high-altitude platform, plays an irreplaceable role.

For ease of description, the following uses a non-terrestrial device represented by a satellite as an example for description.

Satellite communication has features such as a long communication distance, wide coverage area, and flexible networking. The satellite communication can provide a communication service for both fixed terminals and various mobile terminals. A conventional terrestrial network cannot provide seamless coverage for a terminal device, especially in areas in which a base station cannot be deployed, such as oceans, deserts, and airspace. Therefore, an NTN is introduced into a 5th generation (5th generation, 5G) mobile communication system. The NTN provides seamless coverage communication for the terminal device through deployment of a base station or a part of functions of the base station on a high-altitude platform or a satellite. In addition, the high-altitude platform or the satellite is less affected by natural disasters, so that reliability of the 5G system can be improved. In the NTN deployed based on the satellite, the satellite covers the ground through different beams, to form a satellite cell, and a terminal device may be covered by a plurality of satellite cells at a same moment.

Satellite communication systems may be classified into the following three types based on orbital altitudes of the satellites:
a geostationary earth orbit (geostationary earth orbit, GEO) satellite communication system, also referred to as a geosynchronous orbit satellite system, a medium earth orbit (medium earth orbit, MEO) satellite communication system, and a low earth orbit (low earth orbit, LEO) satellite communication system.

A GEO satellite has an orbital altitude of 35786 km. A main advantage is that the GEO satellite can remain stationary relative to the ground and provide a wider coverage area. Disadvantages are as follows: (1) An orbit of the GEO satellite is far away from the earth, and a free space propagation loss is large. As a result, a communication link budget is tight. To increase a transmit/receive gain, an antenna with a large diameter needs to be configured for the satellite. (2) A communication transmission delay is long, and round-trip time may reach approximately 500 ms. This cannot meet a requirement for a real-time service. (3) GEO has limited orbit resources and high launch costs, and cannot provide coverage for polar regions of the earth.

A MEO satellite has an orbital altitude of 2000 km to 35786 km. An advantage is that global coverage can be implemented by using a smaller quantity of satellites. However, the MEO satellite has a higher orbital altitude than LEO satellite, and a transmission delay of MEO satellite communication is still longer than a transmission delay of LEO satellite communication. Considering advantages and disadvantages of the MEO satellite communication, the MEO satellite is mainly used for positioning and navigation.

An LEO satellite has an orbital altitude of 300 km to 2000 km. The LEO satellite has a smaller orbital altitude than the MEO satellite and the GEO satellite, and has advantages of a short data propagation delay, a small transmission loss, and low launch costs. To improve an overall signal processing capability and a communication throughput of a satellite network, a satellite operator increases a quantity of satellites to make up for a limitation of a single satellite in a communication capability. In a future NTN communication system, after a terminal device accesses the system, within a period of time, a plurality of satellites that can communicate with the terminal device and the terminal device are "visible" to each other. In this case, all the plurality of satellites may provide a communication service for the terminal device. This provides a basic condition for coordinated multi-satellite transmission.

The technical solutions provided in embodiments of this application may be applied to various communication systems, for example, a satellite communication system, and a system in which satellite communication and a cellular network are integrated. A cellular network system may include but is not limited to a 5G system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a new radio (new radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (universal mobile telecommunications system, UMTS), a worldwide interoperability for microwave access (worldwide interoperability for microwave access, WiMAX) communication system, a wireless local area network (wireless local area network, WLAN), wireless fidelity (wireless fidelity, Wi-Fi), a next generation communication system, another communication system, or the like. Usually, a conventional communication system supports a finite quantity of connections and is easy to implement. However, with development of communication technologies, a mobile communication system not only supports conventional communication, but also supports, for example, device-to-device (device-to-device, D2D) communication, machine-to-machine (machine-to-machine, M2M) communication, machine type communication (machine type communication, MTC), vehicle-to-vehicle (vehicle-to-vehicle, V2V) communication, another future evolved communication system, and the like. Embodiments of this application may also be applied to these communication systems. The satellite communication system may include various non-terrestrial network systems, for example, networks in which radio frequency transmission is performed by a satellite, an uncrewed aerial system (unmanned aircraft system, UAS) platform, or the like. This is not listed one by one herein.

For example, the following uses an NTN system as an example to provide a specific application scenario of this solution. The NTN system may be specifically a satellite communication system or another non-terrestrial network system. The positioning method in this solution may be applied to a satellite communication scope.

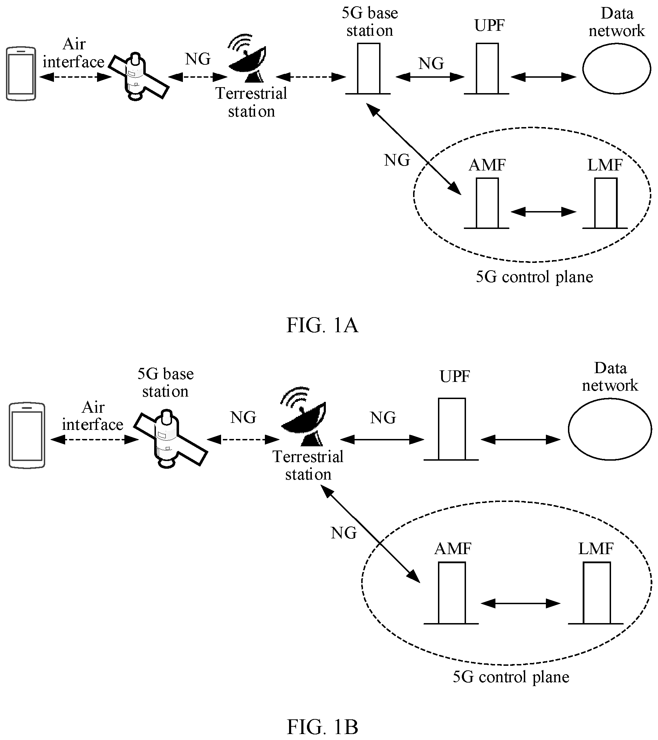

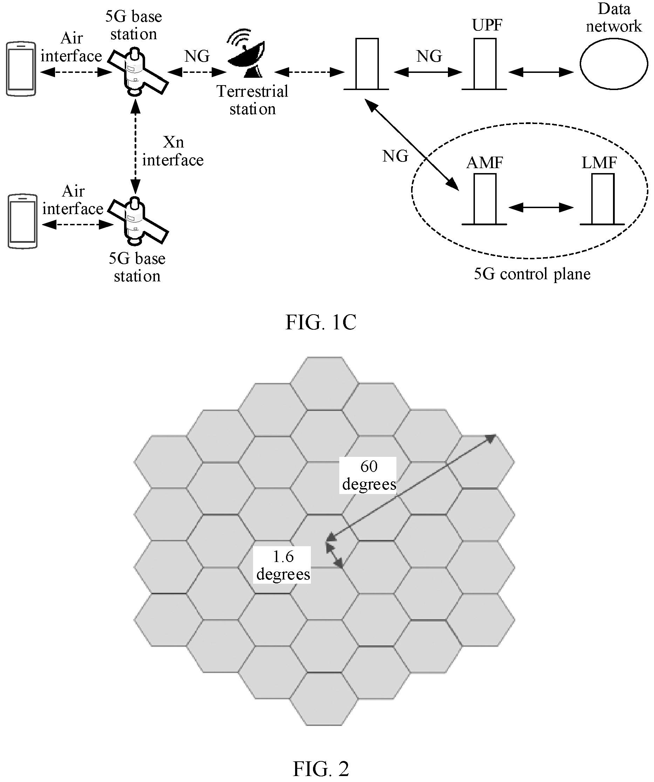

Refer to FIG. 1A, FIG. 1B, and FIG. 1C. A 5G communication system is used as an example. FIG. 1A, FIG. 1B, and FIG. 1C are diagrams of architectures of several communication systems according to embodiments of this application.

As shown in FIG. 1A, FIG. 1B, and FIG. 1C, there may be one or more terminal devices (for example, mobile terminals) and/or network devices (for example, 5G base stations) in a coverage area of a cell of a satellite. The coverage area of the cell may be an area covered by one or more beams of the satellite, or an area at a same level as a cell in an NR system.

In FIG. 1A, a terrestrial terminal device (for example, the mobile terminal) accesses a network through an air interface, and the network device (for example, the 5G base station) may be deployed on the ground, directly connected to a terrestrial 5G core network through a radio link, and connected to a terrestrial station for satellite communication. This type of communication architecture is also referred to as a transparent satellite network architecture. Therefore, the base station is on the ground. In addition, the radio link exists between satellites, to complete signaling exchange and user data transmission between base stations.

In FIG. 1B, a terrestrial terminal device (for example, the mobile terminal) accesses a network through an air interface, and the network device (for example, the 5G base station) may be deployed on the satellite, and connected to a terrestrial 5G core network through a radio link and a terrestrial station. This type of communication architecture is also referred to as a regenerative satellite network architecture. Therefore, the base station or a part of functions of the base station are on the satellite. In addition, the radio link exists between satellites, to complete signaling exchange and user data transmission between base stations.

In FIG. 1C, a terrestrial terminal device (for example, the mobile terminal) accesses a network through an air interface, and the network device (for example, the 5G base station) or a part of functions of the network device (for example, the 5G base station) are deployed on the satellite, and are connected to a terrestrial 5G core network through a radio link and a terrestrial station. A part of functions of the network device (for example, the 5G base station) are deployed on the ground, are directly connected to the terrestrial 5G core network through the radio link, and are connected to a terrestrial station for satellite communication. Therefore, in this type of communication architecture, the base station or a part of functions of the base station are respectively on the satellite and the ground. In addition, the radio link exists between satellites, to complete signaling exchange and user data transmission between base stations.

It may be understood that in actual deployment, the satellite in the foregoing system may alternatively be another NTN device, for example, a high-altitude platform station (high-altitude platform station, HAPS). This is not limited in this application.

Network elements in the scenario and interfaces of the network elements are described as follows.

Terminal device: The terminal device is a mobile device that supports a 5G new radio, and is typically a mobile device such as a user terminal or a wearable device. The terminal device may access a satellite network through an air interface and initiate a service such as a call or network access.

5G base station: The 5G base station mainly provides a wireless access service, schedules radio resources for an access terminal, and provides a reliable wireless transmission protocol, data encryption protocol, and the like.

5G core network: The 5G core network includes services such as user access control, mobility management, session management, user security authentication, and charging. The 5G core network includes a plurality of functional units, and may be divided into a control plane functional entity and a data plane functional entity. An access and mobility management function (access and mobility management function, AMF) is responsible for user access management, security authentication, and mobility management. A location management function (location management function, LMF) is responsible for managing and controlling a location service request of a target terminal, and processing positioning-related information. A user plane function (user plane function, UPF) is responsible for managing functions such as user plane data transmission and traffic statistics.

Terrestrial station: The terrestrial station is responsible for forwarding signaling and service data between a satellite base station and a 5G core network.

5G new radio: The 5G new radio is a radio link between user equipment and a base station.

Xn interface: The Xn interface is an interface between a 5G base station and a base station, and is mainly configured for signaling exchange such as handover.

NG interface: The NG interface is an interface between a 5G base station and a 5G core network, and is mainly for exchanging signaling such as non-access stratum (non-access stratum, NAS) signaling of a core network and service data of a user.

The technical solutions provided in this application mainly relate to two execution entities: a network device and a terminal device, and may be applied to a communication system such as 5G, and in particular, to a communication process of a non-terrestrial network.

The terminal device in embodiments of this application includes but is not limited to a terminal device connected through a wired line, such as a public switched telephone network (public switched telephone network, PSTN), a digital subscriber line (digital subscriber line, DSL), a digital cable, direct cable connection, and/or another data connection network; and/or a terminal device connected through a wireless interface, such as a cellular network, a wireless local area network (wireless local area network, WLAN), a digital television network such as a digital video broadcast-handheld (digital video broadcast-handheld, DVB-H) network, a satellite network, and an amplitude modulation-frequency modulation (amplitude modulation-frequency modulation, AM-FM) broadcast transmitter; and/or an apparatus of another terminal device configured to receive/send a communication signal; and/or an internet of things (internet of things, IoT) device. A terminal device configured to communicate through a wireless interface may be referred to as a "wireless communication terminal", a "wireless terminal", or a "mobile terminal". Examples of the terminal device include but are not limited to a satellite phone or a cellular phone; a personal communication system (personal communication system, PCS) terminal that may combine a cellular radiotelephone with data processing, fax, and a data communication capability; a personal digital assistant (personal digital assistant, PDA) that may include a radiotelephone, a pager, internet/intranet access, a Web browser, a planner, a calendar, and/or a global positioning system (global positioning system, GPS) receiver; and a conventional laptop and/or handheld receiver or another electronic device including a radiotelephone transceiver. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a PDA, a handheld device with a wireless communication function, a compute device, another processing device connected to a wireless modem, a vehicle-mounted device, a wearable device, a terminal device in a 5G network, a terminal device in a future evolved public land mobile network (public land mobile network, PLMN), or the like.

The network device in embodiments of this application may provide communication coverage in a specific geographical area, may communicate with one or more terminal devices located within a coverage area, and may be configured to communicate with one or more base stations with a part of terminal functions (for example, communication between a macro base station and a micro base station such as an access point). Optionally, the network device may be a satellite, a base transceiver station (base transceiver station, BTS) in a GSM system or a CDMA system, an evolved NodeB (evolved NodeB, eNB) in an LTE system, a next generation NodeB (next generation node base station, gNB) in a 5G system or an NR system, another satellite base station, or a satellite relay node. Alternatively, the network device may be an access point (access point, AP), a transmission reception point (transport point, TRP), a central unit (central unit, CU), or another network entity, and may include a part or all of functions of the foregoing network entities.

It may be understood that a device with a communication function in a network/system in embodiments of this application may be referred to as a communication device. The communication systems shown in FIG. 1A, FIG. 1B, and FIG. 1C are used as examples. The communication device may include a network device and a terminal device that have a communication function. The network device and the terminal device may be specific devices described above. Details are not described herein again. The communication device may further include another device in the communication systems, for example, a network controller, a mobility management entity, or another network entity. This is not limited in embodiments of this application.

It should be further noted that in this application, the descriptions "satellite" and "satellite network device" are equivalent. That is, a satellite mentioned in this application represents a set of a satellite and another network device that are related to satellite communication.

It may be understood that a cell in the NTN system may be a projection region of a beam of the satellite on the ground, may be projection regions of a plurality of beams of the satellite on the ground, or may be a part of a projection region of one or more beams on the ground. This is not limited in embodiments of this application.

In the NTN system, the satellite may send synchronization signal blocks (synchronization signal block, SSB) in a manner of beam sweeping. To align with the satellite, the terminal device needs to perform frequency scanning and beam scanning. The terminal device needs to scan, on a plurality of frequencies and in a plurality of beam directions, the SSBs sent by the satellite. For a single frequency, the terminal device needs to scan, in the beam directions, the SSBs sent by the satellite, and time required for the terminal device to search for the single frequency is determined by an SSB sweeping periodicity and a quantity of beams required for the terminal device to complete scanning. If the terminal device needs to scan a plurality of frequencies, time for the terminal device to acquire the satellite is directly proportional to a quantity of frequencies to be scanned. For example, as shown in FIG. 2, the terminal device has no built-in satellite ephemeris information, an antenna specification of the terminal device is a 32×32 antenna array, a 3 dB beam width of the terminal device is 3.2 degrees, a maximum scan angle of the terminal device is 60 degrees, a quantity of beams required for the terminal device to complete scanning is approximately 2614, and an SSB sweeping periodicity is 20 ms. Therefore, time required for the terminal device to search for a single frequency is 2614×20 ms=52.28s, and the time required for the terminal device to search for the single frequency is long. Especially for a terminal device located at an edge beam position, because it takes a long time for the terminal device to acquire a satellite, in a process in which the terminal device performs beam alignment on the satellite, the satellite may have moved away and may no longer cover the terminal device. Consequently, the terminal device needs to perform frequency scanning and beam scanning again to acquire a next satellite, resulting in a long satellite acquisition time for the terminal device.

In view of this, embodiments of this application provide a communication method, to effectively shorten satellite acquisition time for a terminal device. The method provided in embodiments of this application may be applied to the system shown in FIG. 1A, FIG. 1B, or FIG. 1C.

It may be understood that, although a relay node is not involved in the method shown below, a person skilled in the art may learn that, when a transmit end and a receive end communicate with each other, a forwarding operation may be performed by the relay node.

It may be understood that in an interaction diagram in this application, the method is illustrated by using an example in which a network device and a terminal device function as execution entities of interaction illustration. However, the execution entities of the interaction illustration are not limited in this application. For example, the network device in the interaction diagram may alternatively be a chip, a chip system, or a processor that supports the network device in implementing the method, or may be a logical node, a logical module, or software that can implement all or a part of functions of the network device. The terminal device in the interaction diagram may alternatively be a chip, a chip system, or a processor that supports the terminal in implementing the method.

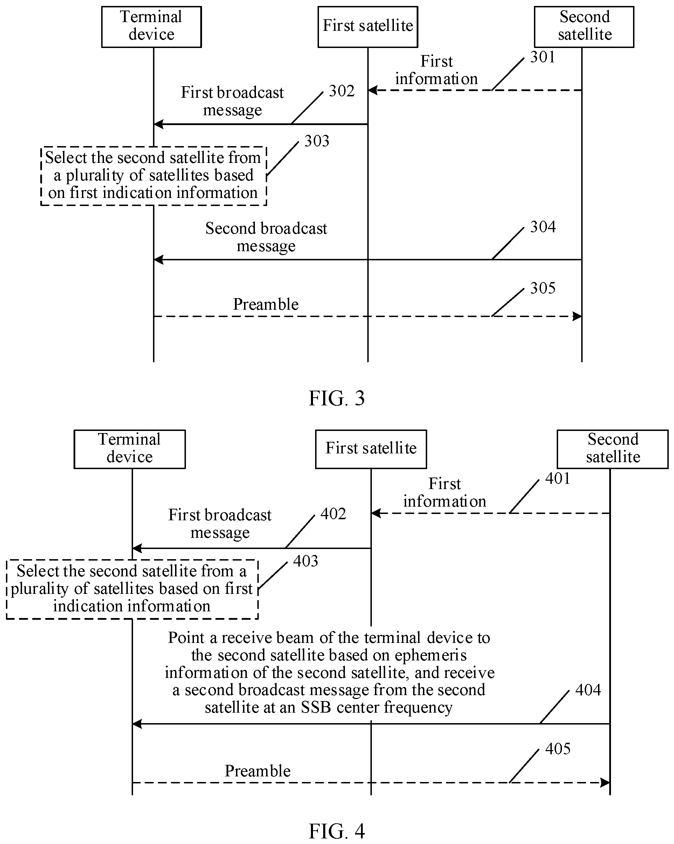

FIG. 3 is a schematic flowchart of a communication method according to an embodiment of this application. As shown in FIG. 3, the method includes but is not limited to the following steps.

Optionally, the method shown in FIG. 3 may include step 301.

301: A second satellite sends first information, and correspondingly, a first satellite receives the first information, where the first information includes ephemeris information of the second satellite.

302: The first satellite sends a first broadcast message, and correspondingly, a terminal device receives the first broadcast message. The first broadcast message includes first indication information, where the first indication information indicates the ephemeris information of the second satellite.

For example, a coverage range of the first satellite is greater than a coverage range of the second satellite. Alternatively, an orbital altitude of the first satellite is higher than an orbital altitude of the second satellite. The first satellite may also be referred to as a high-orbit satellite, and the second satellite may also be referred to as a low-orbit satellite. For example, the first satellite may be a GEO satellite, and the second satellite may be an LEO satellite. The second satellite may be located within the coverage range of the first satellite.

In an example, the first indication information includes the ephemeris information of the second satellite.

In another example, the first indication information includes ephemeris information of the first satellite and an offset of an ephemeris of the second satellite relative to an ephemeris of the first satellite. The terminal device may determine the ephemeris information of the second satellite based on the first indication information. For example, if the ephemeris information of the first satellite includes coordinates, an orientation, a speed, and other parameters of the first satellite, the first indication information includes a difference between coordinates of the second satellite and the coordinates of the first satellite, a difference between an orientation of the second satellite and the orientation of the first satellite, a difference between a speed of the second satellite and the speed of the first satellite, and the like.

For example, the first broadcast message may be a system information block (system information block, SIB) message sent by the first satellite. The first broadcast message may include access information of the first satellite, or may not include access information of the first satellite.

In an example, the first broadcast message may be a newly defined SIB1 information element, for example, IE SIB1-lightweight. The first broadcast message may not include the access information, SI scheduling information, and other information of the first satellite, but includes the first indication information indicating the ephemeris information of the second satellite.

In another example, fourth indication information may indicate whether the first broadcast message includes the access information of the first satellite. For example, the first broadcast message includes the fourth indication information, and the fourth indication information indicates that the first broadcast message further includes the access information of the first satellite. The first broadcast message may be a SIB1 message specified in an NR protocol. The fourth indication information may include a flag identifier (FlagAccessOther), and a value of the flag identifier indicates whether the first broadcast message includes the access information of the first satellite. For example, when the flag identifier is 1, it indicates that the first broadcast message includes the access information of the first satellite. When the flag identifier is 0, it indicates that the first broadcast message does not include the access information of the first satellite.

It may be understood that values of the flag identifier are merely examples, and should not be understood as a limitation on this application. In embodiments of this application, the value of the flag identifier may alternatively be another value. This is not limited in this application.

In a possible implementation, the first broadcast message further includes at least one of the following: SSB information of the second satellite, second indication information, or third indication information, where the second indication information indicates a coverage range of the second satellite, and the third indication information indicates a load status of the second satellite.

For example, the terminal device may search for a broadcast signal of the first satellite in a manner of frequency scanning or beam scanning, synchronize with the first satellite, and obtain the first broadcast message.

In a possible implementation, the first indication information indicates ephemeris information of a plurality of satellites, and the method shown in FIG. 3 further includes step 303.

303: The terminal device selects the second satellite from the plurality of satellites based on the first indication information.

Orbital altitudes of the plurality of satellites are lower than the orbital altitude of the first satellite, or a coverage range of each of the plurality of satellites is less than the coverage range of the first satellite. For example, the plurality of satellites are located within the coverage range of the first satellite.

For example, the first indication information may include an ephemeris information list, and the ephemeris information list includes the ephemeris information of the plurality of satellites, or offsets of ephemerides of the plurality of satellites relative to the ephemeris of the first satellite. For example, the ephemeris information list may be as shown in Table 1. N satellites are used as examples in Table 1. A satellite 1_1 corresponds to ephemeris information 1_1, ..., and a satellite 1_N corresponds to ephemeris information 1_N.

**Table 1**

| Satellite list | Ephemeris information list |
|---|---|
| Satellite 1_1 | Ephemeris information 1_1 |
| Satellite 1_2 | Ephemeris information 1_2 |
| ... | ... |
| Satellite 1_N | Ephemeris information 1_N |

The terminal device may select, from the plurality of satellites based on a global navigation satellite system (global navigation satellite system, GNSS) position of the terminal device, the second satellite as a target access satellite.

In an example, the second satellite is one of the plurality of satellites that is closer to the terminal device, or the second satellite is one of the plurality of satellites that has a distance to the terminal device less than or equal to a distance threshold. For example, the second satellite may be a satellite of the plurality of satellites that is closest to the terminal device. The distance threshold may be configured by a network, predefined in a protocol, or determined based on a service requirement of the terminal device or a capability of the terminal device.

In this example, the second satellite that meets a condition is selected from the plurality of satellites based on distances between the plurality of satellites and the terminal device, to ensure that the second satellite provides a better access service for the terminal device.

In another example, the second satellite is one of the plurality of satellites that has longer service duration, or the second satellite is one of the plurality of satellites that has service duration greater than or equal to a time threshold. For example, the terminal device may determine service duration of the plurality of satellites based on the ephemeris information of the plurality of satellites, and select, from the plurality of satellites based on the service duration of the plurality of satellites, the second satellite that meets a condition. For example, the second satellite may be one of the plurality of satellites that has longest service duration. It may be understood that the time threshold may be configured by a network, predefined in a protocol, or determined based on a service requirement of the terminal device.

In this example, the terminal device may select, from the plurality of satellites, the second satellite whose service duration meets a condition, so that the terminal device can be prevented from frequently switching between service satellites, and the second satellite can provide a better access service for the terminal device.

In still another example, the second satellite is one of the plurality of satellites that has higher signal quality, or the second satellite is one of the plurality of satellites that has signal quality greater than or equal to a signal quality threshold. For example, the signal quality of the second satellite may be represented by reference signal received power (reference signal received power, RSRP) or reference signal received quality (reference signal received quality, RSRQ) corresponding to the second satellite. For example, larger PSRP of the second satellite indicates higher signal quality of the second satellite. For another example, larger PSRQ of the second satellite indicates higher signal quality of the second satellite. The terminal device may determine positions or orientations of the plurality of satellites based on the ephemeris information of the plurality of satellites, and separately receive reference signals sent by the plurality of satellites, to obtain signal quality of each of the plurality of satellites. The terminal device then selects, from the plurality of satellites, the second satellite that has higher signal quality or that has signal quality greater than or equal to the signal quality threshold as the target access satellite.

In this example, the terminal device may select, from the plurality of satellites, the second satellite whose signal quality meets a requirement, to ensure quality of service of an access service provided by the second satellite for the terminal device.

304: The second satellite sends a second broadcast message, and correspondingly, the terminal device receives the second broadcast message from the second satellite based on the first indication information.

For example, the terminal device determines a position or the orientation of the second satellite based on the first indication information, and adjusts a direction of a receive beam to point the receive beam to the second satellite, so as to monitor a broadcast signal of the second satellite. The second broadcast message may be a SIB message sent by the second satellite, and the terminal device can access the second satellite based on the second broadcast message.

In some possible implementations, after the terminal device receives the second broadcast message, the method shown in FIG. 3 further includes step 305.

305: The terminal device sends a preamble, and correspondingly, the second satellite receives the preamble.

The terminal device may perform an access procedure based on the preamble (Msg1), to access the second satellite.

In embodiments of this application, the coverage range of the first satellite is greater than the coverage range of the second satellite. The first satellite may broadcast the ephemeris information of the second satellite, so that the terminal device can obtain the ephemeris information of the second satellite, and adjust the direction of the receive beam based on the ephemeris information of the second satellite, to point the receive beam to the second satellite. The terminal device does not need to perform beam scanning, and satellite acquisition time of the terminal device can be effectively shortened, enabling the terminal device to quickly access the second satellite.

In some possible implementations, the ephemeris information in embodiments of this application may alternatively be replaced with position information or orbit information. In other words, the first indication information indicates position information or orbit information of the second satellite. For example, the first indication information may include the position information or the orbit information of the second satellite. For another example, the first indication information may include position information of the first satellite and an offset of the position of the second satellite relative to a position of the first satellite, or the first indication information may include orbit information of the first satellite and an offset of an orbit of the second satellite relative to an orbit of the first satellite.

FIG. 4 is a schematic flowchart of another communication method according to an embodiment of this application. As shown in FIG. 4, the method includes but is not limited to the following steps.

Optionally, the method shown in FIG. 4 may include step 401.

401: A second satellite sends first information, and correspondingly, a first satellite receives the first information, where the first information includes ephemeris information and SSB information of the second satellite.

402: The first satellite sends a first broadcast message, and correspondingly, a terminal device receives the first broadcast message. The first broadcast message includes first indication information and the SSB information of the second satellite, where the first indication information indicates the ephemeris information of the second satellite.

In an example, the SSB information may include at least one of the following: an SSB center frequency, a subcarrier spacing (subcarrier spacing, SCS), a system frame number (system frame number, SFN) offset, an SSB sending periodicity, SSB time domain position information, a half-frame index, and an SSB measurement timing configuration (SSB measurement timing configuration, SMTC).

In another example, the first broadcast message may include an offset between the SSB information of the second satellite and SSB information of the first satellite. For example, the first broadcast message includes a difference between an SSB center frequency of the second satellite and an SSB center frequency of the first satellite, a difference between an SSB sending periodicity of the second satellite and an SSB sending periodicity of the first satellite, a difference between SSB sending time of the second satellite and SSB sending time of the first satellite, and other offsets.

In a possible implementation, the first broadcast message includes ephemeris information of a plurality of satellites and SSB information of the plurality of satellites. For example, the ephemeris information and the SSB information of the plurality of satellites may be included in the first broadcast message in tabular form. As shown in Table 2, an example in which N satellites are involved is used. The first broadcast message may include ephemeris information and SSB information of the N satellites.

**Table 2**

| Satellite list | Ephemeris information list | SSB information |
|---|---|---|
| Satellite 1_1 | Ephemeris information 1_1 | SSB center frequency, SSB sending periodicity, SMTC, and the like |
| Satellite 1_2 | Ephemeris information 1_2 | SSB center frequency, SSB sending periodicity, SMTC, and the like |
| ... | ... | ... |
| Satellite 1_N | Ephemeris information 1_N | SSB center frequency, SSB sending periodicity, SMTC, and the like |

Optionally, the method shown in FIG. 4 may further include step 403.

403: The terminal device selects the second satellite from the plurality of satellites based on the first indication information.

The terminal device may select, from the plurality of satellites based on a GNSS position, the second satellite as a target access satellite.

It may be understood that for detailed descriptions of step 403, refer to related descriptions in step 303. Details are not described herein again.

It may be understood that for related descriptions of the first broadcast message, the first indication information, and the second satellite, refer to related descriptions in step 302 in FIG. 3. Details are not described herein again.

404: The terminal device points a receive beam of the terminal device to the second satellite based on the ephemeris information of the second satellite, and receives a second broadcast message from the second satellite at the SSB center frequency.

The terminal device may adjust a direction of the receive beam of the terminal device based on the ephemeris information of the second satellite, to point the receive beam to the second satellite, and monitor a broadcast signal of the second satellite at the SSB center frequency to receive the second broadcast message.

For example, the terminal device may further determine an SSB time domain position of the second satellite based on the SSB information of the second satellite, and monitor the broadcast signal of the second satellite at the SSB time domain position of the second satellite (for example, when the second satellite sends an SSB), and may not monitor the broadcast signal of the second satellite at another time, thereby reducing power consumption of the terminal device.

In some possible implementations, after the terminal device receives the second broadcast message, the method shown in FIG. 4 further includes step 405.

405: The terminal device sends a preamble, and correspondingly, the second satellite receives the preamble.

The terminal device may perform an access procedure based on the preamble, to access the second satellite.

In embodiments of this application, a coverage range of the first satellite is greater than a coverage range of the second satellite. The first satellite may broadcast the ephemeris information and the SSB information of the second satellite, the terminal device does not need to perform beam scanning and frequency scanning, and satellite acquisition time of the terminal device can be effectively shortened, enabling the terminal device to quickly access the second satellite.

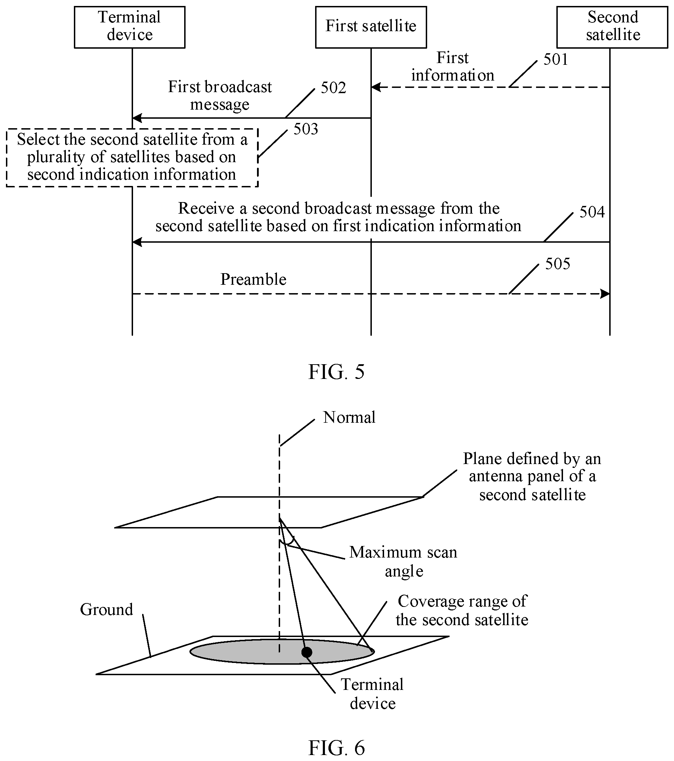

FIG. 5 is a schematic flowchart of still another communication method according to an embodiment of this application. As shown in FIG. 5, the method includes but is not limited to the following steps.

Optionally, the method shown in FIG. 5 may include step 501.

501: A second satellite sends first information, and correspondingly, a first satellite receives the first information, where the first information includes ephemeris information of the second satellite and a coverage range of the second satellite.

502: The first satellite sends a first broadcast message, and correspondingly, a terminal device receives the first broadcast message. The first broadcast message includes first indication information and second indication information, where the first indication information indicates the ephemeris information of the second satellite, and the second indication information indicates the coverage range of the second satellite.

In an example, the second indication information indicates latitude and longitude corresponding to the coverage range of the second satellite. The second indication information includes a longitude range and a latitude range in the coverage range of the second satellite, and the terminal device may determine, based on GNSS information of the terminal device, whether the terminal device is located within the coverage range of the second satellite. In this example, the second indication information indicates the latitude and the longitude corresponding to the coverage range of the second satellite, so that the terminal device can quickly determine the coverage range of the second satellite based on the latitude and the longitude.

In another example, the second indication information indicates an identifier of a geographical area corresponding to the coverage range of the second satellite. In this example, a global geographical area may be divided into a plurality of geographical areas, and the plurality of geographical areas are numbered, to obtain an identifier of each geographical area. The first satellite may determine, based on interaction with the second satellite, a geographical area included in the coverage range of the second satellite. For example, the second satellite reports, to the first satellite, a coverage area of the second satellite, and the first satellite obtains the coverage range of the second satellite, determines the geographical area included in the coverage range of the second satellite, and broadcasts, by using the first broadcast message, the identifier of the geographical area corresponding to the coverage range of the second satellite. For another example, the second satellite reports, to the first satellite, an identifier of the geographical area included in the coverage range of the second satellite, and the first satellite broadcasts, by using the first broadcast message, the identifier of the geographical area corresponding to the coverage range of the second satellite.

For example, the terminal device stores a mapping relationship between an identifier and a geographical area. The terminal device may determine, based on the GNSS information of the terminal device, a geographical area in which the terminal device is located, and compare an identifier of the geographical area in which the terminal device is located with the identifier of the geographical area corresponding to the coverage range of the second satellite, to determine whether the terminal device is located within the coverage range of the second satellite.

In this example, the coverage area of the second satellite can be accurately indicated based on the identifier of the geographical area corresponding to the coverage range of the second satellite.

In still another example, the second indication information indicates a value range of an included angle formed between a beam emitted by the second satellite and a plane defined by an antenna panel of the second satellite. The beam emitted by the second satellite may be received within the coverage range of the second satellite. Therefore, the coverage range of the second satellite may be indicated based on the value range of the included angle formed between the beam emitted by the second satellite and the plane defined by the antenna panel of the second satellite. For example, the second indication information may indicate a minimum value of the included angle formed between the beam emitted by the second satellite and the plane defined by the antenna panel of the second satellite. The terminal device may determine, by comparing whether a first included angle is included in the value range, whether the terminal device is within the coverage range of the second satellite. The first included angle is an included angle formed between a line, connecting the terminal device to a reference point on the plane defined by the antenna panel, and the plane defined by the antenna panel.

Alternatively, the second indication information indicates a maximum value of an included angle formed between the beam emitted by the second satellite and a normal of the antenna panel of the second satellite, and the normal of the antenna panel of the second satellite is perpendicular to the plane defined by the antenna panel of the second satellite. The maximum value of the included angle formed between the beam emitted by the second satellite and the normal of the antenna panel of the second satellite may also be referred to as a maximum scan angle. As shown in FIG. 6, the normal of the antenna panel of the second satellite points to the geocenter. The terminal device determines, based on the GNSS information of the terminal device and the ephemeris information of the second satellite, an included angle formed between the terminal device and the normal of the antenna panel of the second satellite. If an included angle formed between the line, connecting the terminal device to the reference point on the antenna panel, and the normal of the antenna panel is less than the maximum scan angle of the second satellite, the terminal device is within the coverage range of the second satellite.

For example, the second indication information may further indicate an included angle formed between the plane defined by the antenna panel and the ground, or an included angle formed between the normal of the antenna panel and the ground. When the plane defined by the antenna panel of the second satellite is not parallel to the ground or the normal of the antenna panel of the second satellite does not point to the geocenter, the terminal device may determine the coverage range of the second satellite based on the value range of the included angle formed between the beam emitted by the second satellite and the plane defined by the antenna panel of the second satellite, and the included angle formed between the plane defined by the antenna panel and the ground or the included angle formed between the normal of the antenna panel and the ground, to determine whether the terminal device is located within the coverage range of the second satellite.

For example, the second indication information further indicates coverage ranges of a plurality of satellites. For example, ephemeris information and the coverage ranges of the plurality of satellites may be included in the first broadcast message in tabular form. As shown in Table 3, an example in which N satellites are involved is used. The first broadcast message may include ephemeris information and coverage ranges of the N satellites. For a satellite 1_1, ephemeris information is ephemeris information 1_1, and a coverage range is a coverage range 1_1.

**Table 3**

| Satellite list | Ephemeris information list | Coverage range |
|---|---|---|
| Satellite 1_1 | Ephemeris information 1_1 | Coverage range 1_1 |
| Satellite 1_2 | Ephemeris information 1_2 | Coverage range 1_2 |
| ... | ... | ... |
| Satellite 1_N | Ephemeris information 1_N | Coverage range 1_N |

Optionally, the method shown in FIG. 5 further includes step 503.

503: The terminal device selects the second satellite from the plurality of satellites based on the second indication information.

For example, the terminal device is located within the coverage range of the second satellite. The terminal device may determine, based on a GNSS position and the second indication information, that the terminal device is located within the coverage range of the second satellite, and select the second satellite as a target access satellite. The terminal device may select, from the plurality of satellites based on the GNSS position, a satellite that covers the terminal device as a candidate satellite, where the candidate satellite includes the second satellite. When a quantity of candidate satellites is 1, the terminal device selects the satellite (that is, the second satellite) as the target access satellite, and accesses the satellite. When the quantity of candidate satellites is greater than 1, the second satellite is a satellite of the candidate satellites that meets a condition. For example, the second satellite is one of the candidate satellites that is closer to the terminal device, or the second satellite is one of the candidate satellites that has longer service duration, or the second satellite is one of the candidate satellites that has higher signal quality.

504: The second satellite broadcasts a second broadcast message, and correspondingly, the terminal device receives the second broadcast message from the second satellite based on the first indication information.

It may be understood that for a specific implementation of step 504, refer to the specific implementation of step 304 in FIG. 3. Details are not described herein again.

It may be understood that for related descriptions of the first broadcast message, the first indication information, and the second satellite, refer to related descriptions in step 302 in FIG. 3. Details are not described herein again.

In some possible implementations, after the terminal device receives the second broadcast message, the method shown in FIG. 5 further includes step 505.

505: The terminal device sends a preamble, and correspondingly, the second satellite receives the preamble.

The terminal device may perform an access procedure based on the preamble, to access the second satellite.

In this embodiment of this application, the first satellite may broadcast the ephemeris information and the coverage range of the second satellite, so that the terminal device can determine whether the terminal device is located within the coverage range of the second satellite, and the terminal device accesses the second satellite more quickly, thereby greatly reducing satellite acquisition time of the terminal device.

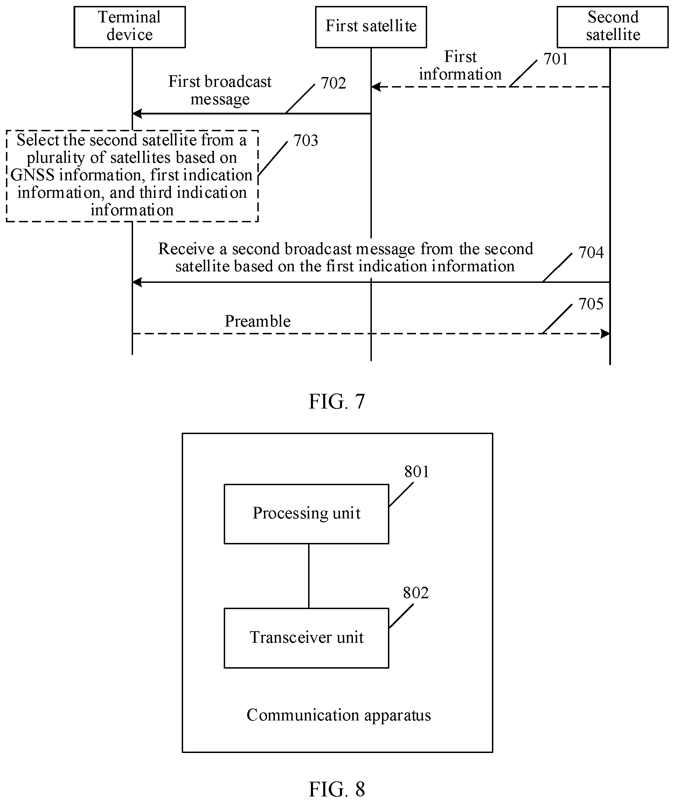

FIG. 7 is a schematic flowchart of still another communication method according to an embodiment of this application. As shown in FIG. 7, the method includes but is not limited to the following steps.

Optionally, the method shown in FIG. 7 may include step 701.

701: A second satellite sends first information to a first satellite, and correspondingly, the first satellite receives the first information. The first information includes ephemeris information of the second satellite and a load status of the second satellite.

702: The first satellite sends a first broadcast message, and correspondingly, a terminal device receives the first broadcast message. The first broadcast message includes first indication information and third indication information, where the first indication information indicates the ephemeris information of the second satellite, and the third indication information indicates the load status of the second satellite.

For example, the third indication information includes a quantity of users currently connected to the second satellite and/or a ratio of the quantity of users currently connected to the second satellite to a quantity of users allowed to be connected to the second satellite.

Optionally, the first indication information indicates ephemeris information of a plurality of satellites, and the third indication information indicates load statuses of the plurality of satellites. The ephemeris information and the load statuses of the plurality of satellites may be included in the first broadcast message in tabular form. As shown in Table 4, an example in which N satellites are involved is used. The first broadcast message may include ephemeris information and coverage statuses of the N satellites. For a satellite 1_1, ephemeris information is ephemeris information 1_1, and a load status is a load status 1_1.

**Table 4**

| Satellite list | Ephemeris information list | Load status |
|---|---|---|
| Satellite 1_1 | Ephemeris information 1_1 | Load status 1_1 |
| Satellite 1_2 | Ephemeris information 1_2 | Load status 1_2 |
| ... | ... | ... |
| Satellite 1_N | Ephemeris information 1_N | Load status 1_N |

Optionally, the method shown in FIG. 7 may further include step 703.

703: The terminal device selects the second satellite from the plurality of satellites based on GNSS information, the first indication information, and the third indication information.

For example, the second satellite is a satellite of the plurality of satellites that has a better load status. To be specific, the terminal device may select, from the plurality of satellites based on the load statuses of the plurality of satellites, a satellite having a better load status. For example, the second satellite may be one of the plurality of satellites that has a smaller quantity of currently connected users, or the second satellite is one of the plurality of satellites that has a smaller ratio of a quantity of currently connected users to a quantity of users allowed to be connected.

704: The second satellite broadcasts a second broadcast message, and correspondingly, the terminal device receives the second broadcast message from the second satellite based on the first indication information.

It may be understood that for a specific implementation of step 704, refer to the specific implementation of step 304 in FIG. 3. Details are not described herein again.

It may be understood that for related descriptions of the first broadcast message, the first indication information, and the second satellite, refer to related descriptions in step 302 in FIG. 3. Details are not described herein again.

In some possible implementations, after the terminal device receives the second broadcast message, the method shown in FIG. 7 further includes step 705.

705: The terminal device sends a preamble, and correspondingly, the second satellite receives the preamble.

The terminal device may perform an access procedure based on the preamble, to access the second satellite.

In this embodiment of this application, the first satellite may broadcast the ephemeris information and the load status of the second satellite, so that the terminal device can select a more appropriate second satellite based on the load status, thereby ensuring load balancing between satellites, avoding long time for subsequent access caused by congestion, and ensuring that the second satellite can provide a better access service for the terminal device.

It may be understood that the foregoing embodiments may be combined with each other. To be specific, the first broadcast message includes at least one of the first indication information and the SSB information, the second indication information, or the third indication information. For example, the method shown in FIG. 4 may be combined with the method shown in FIG. 5. To be specific, the first broadcast message includes the first indication information, the SSB information, and the second indication information. Details are not described herein.

The following describes apparatuses provided in embodiments of this application.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 8 to FIG. 10.

FIG. 8 is a diagram of a structure of a communication apparatus according to an embodiment of this application. As shown in FIG. 8, the communication apparatus includes a processing unit 801 and a transceiver unit 802. The transceiver unit 802 may implement a corresponding communication function, and the processing unit 801 is configured to process data. For example, the transceiver unit 802 may also be referred to as a communication interface, a communication unit, or the like.

In some embodiments of this application, the communication apparatus may be configured to perform an action performed by the terminal device in the foregoing method embodiments. In this case, the communication apparatus may be the terminal device, or the communication apparatus may be a component (for example, a chip or a system) that may be disposed in the terminal device. The transceiver unit 802 is configured to perform a receiving/sending-related operation of the terminal device in the foregoing method embodiments. The processing unit 801 is configured to perform a processing-related operation of the terminal device in the foregoing method embodiments.

For example, the transceiver unit 802 is configured to receive a first broadcast message from a first satellite. The processing unit 801 is configured to receive, through the transceiver unit 802 based on first indication information, a second broadcast message from a second satellite.

It may be understood that for detailed descriptions of the first satellite, the first broadcast message, the first indication information, the second satellite, the second broadcast message, and the like, refer to the foregoing method embodiments. Details are not described herein again.

In some other embodiments of this application, the communication apparatus may be configured to perform an action performed by the first satellite in the foregoing method embodiments. In this case, the communication apparatus may be the first satellite, or the communication apparatus may be a component (for example, a chip or a system) that may be disposed in the first satellite. The transceiver unit 802 is configured to perform a receiving/sending-related operation of the first satellite in the foregoing method embodiments. The processing unit 801 is configured to perform a processing-related operation of the first satellite in the foregoing method embodiments.

For example, the processing unit 801 is configured to obtain ephemeris information of a second satellite. The transceiver unit 802 is configured to send a first broadcast message.

Optionally, the transceiver unit 802 is further configured to receive first information.

It may be understood that for detailed descriptions of the first satellite, the first broadcast message, the first indication information, the second satellite, the second broadcast message, the first information, and the like, refer to the foregoing method embodiments. Details are not described herein again.

In still some other embodiments of this application, the communication apparatus may be configured to perform an action performed by the second satellite in the foregoing method embodiments. In this case, the communication apparatus may be the second satellite, or the communication apparatus may be a component (for example, a chip or a system) that may be disposed in the second satellite. The transceiver unit 802 is configured to perform a receiving/sending-related operation of the second satellite in the foregoing method embodiments. The processing unit 801 is configured to perform a processing-related operation of the second satellite in the foregoing method embodiments.

For example, the transceiver unit 802 is configured to send first information and a second broadcast message.

It may be understood that for detailed descriptions of the first information, the second broadcast message, and the like, refer to the foregoing method embodiments. Details are not described herein again.

Optionally, the communication apparatus may further include a storage unit. The storage unit may be configured to store instructions and/or data. The processing unit 801 may read the instructions and/or the data in the storage unit, so that the communication apparatus implements the foregoing method embodiments.

It may be understood that the detailed descriptions of the transceiver unit and the processing unit described in this embodiment of this application are merely examples. For specific functions, performed steps, or the like of the transceiver unit and the processing unit, refer to the foregoing method embodiments. Details are not described herein again.

The foregoing describes the communication apparatus in embodiments of this application. The following describes a possible product form of the communication apparatus. It should be understood that any product in any form that has a function of the communication apparatus in FIG. 7 falls within the protection scope of embodiments of this application. It should be further understood that the following descriptions are merely examples, and do not limit the product form of the communication apparatus in embodiments of this application.

In a possible implementation, in the communication apparatus shown in FIG. 8, the processing unit 801 may be one or more processors, and the transceiver unit 802 may be a transceiver. Alternatively, the transceiver unit 802 may be a sending unit and a receiving unit. The sending unit may be a transmitter, and the receiving unit may be a receiver. The sending unit and the receiving unit are integrated into one device, for example, a transceiver. In embodiments of this application, the processor and the transceiver may be coupled or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to a transceiver, so that the transceiver transmits the information. After the information is output by the processor, other processing may further need to be performed before the information arrives at the transceiver. Similarly, a process of receiving information in the foregoing method may be understood as a process of receiving the input information by the processor. When the processor receives the input information, the transceiver receives the information and inputs the information into the processor. Further, after the transceiver receives the information, other processing may need to be performed before the information is received by the processor.

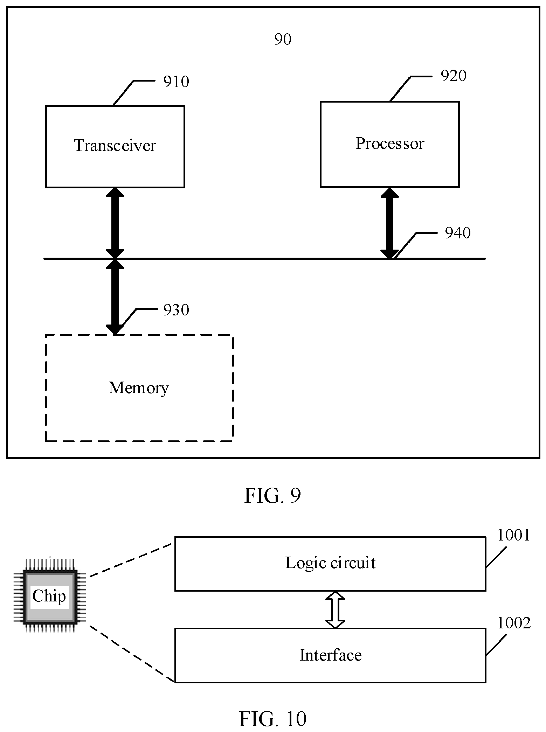

As shown in FIG. 9, the communication apparatus 90 includes one or more processors 920 and a transceiver 910.

In some embodiments of this application, the communication apparatus may be configured to perform steps, functions, or the like performed by the terminal device in the foregoing method embodiments.

For example, the transceiver 910 is configured to receive a first broadcast message from a first satellite. The processor 920 is configured to receive, through the transceiver 910 based on first indication information, a second broadcast message from a second satellite.

In some other embodiments of this application, the communication apparatus may be configured to perform steps, functions, or the like performed by the first satellite in the foregoing method embodiments.

For example, the processor 920 obtains ephemeris information of a second satellite. The transceiver 910 is configured to send a first broadcast message.

In still some other embodiments of this application, the communication apparatus may be configured to perform steps, functions, or the like performed by the second satellite in the foregoing method embodiments.

For example, the transceiver 910 is configured to send first information and a second broadcast message.

It may be understood that the detailed descriptions of the transceiver and the processor described in this embodiment of this application are merely examples. For specific functions, performed steps, or the like of the transceiver and the processor, refer to the foregoing method embodiments. Details are not described herein again.

In the foregoing embodiments, for descriptions of the first satellite, the first broadcast message, the first indication information, the second satellite, the second broadcast message, the first information, and the like, refer to the descriptions in the foregoing method embodiments. Details are not described herein again.

In implementations of the communication apparatus shown in FIG. 9, the transceiver may include a receiver machine and a transmitter machine. The receiver machine is configured to perform a receiving function (or operation), and the transmitter machine is configured to perform a transmitting function (or operation). In addition, the transceiver is configured to communicate with another device/apparatus through a transmission medium.

Optionally, the communication apparatus 90 may further include one or more memories 930, configured to store program instructions, data, and/or the like. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. Optionally, at least one of the one or more memories may be included in the processor.

A specific connection medium between the transceiver 910, the processor 920, and the memory 930 is not limited in this embodiment of this application. In this embodiment of this application, the memory 930, the processor 920, and the transceiver 910 are connected through a bus 940 in FIG. 9. The bus is represented by using a bold line in FIG. 9. A connection manner between other components is merely an example for description, and is not limited thereto. The bus may be classified into an address bus, a data bus, a control bus, and the like. For ease of representation, only one bold line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like, and may implement or perform the methods, steps, and logic block diagrams disclosed in embodiments of this application. The general-purpose processor may be a microprocessor, any conventional processor, or the like. The steps of the method with reference to embodiments of this application may be directly performed and completed by a hardware processor, or may be performed and completed by using a combination of hardware and software modules in the processor, or the like.

In embodiments of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this is not limited thereto. The memory in embodiments of this application may alternatively be a circuit or any other apparatus that can implement a storage function, and is configured to store program instructions and/or data.

For example, the processor 920 is mainly configured to process a communication protocol and communication data, control the entire communication apparatus, execute a software program, and process data of the software program. The memory 930 is mainly configured to store the software program and the data. The transceiver 910 may include a control circuit and an antenna. The control circuit is mainly configured to perform conversion between a baseband signal and a radio frequency signal and process the radio frequency signal. The antenna is mainly configured to send and receive a radio frequency signal in a form of an electromagnetic wave. The input/output apparatus, such as a touchscreen, a display, or a keyboard, is mainly configured to receive data input by a user and output data to the user.

After the communication apparatus is powered on, the processor 920 may read the software program in the memory 930, interpret and execute instructions of the software program, and process the data of the software program. When data needs to be sent in a wireless manner, the processor 920 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives, through the antenna, a radio frequency signal, converts the radio frequency signal into a baseband signal, and outputs the baseband signal to the processor 920, and the processor 920 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further include more components and the like than those in FIG. 9. This is not limited in this embodiment of this application. The methods performed by the processor and the transceiver are merely examples. For specific steps performed by the processor and the transceiver, refer to the method described above.

In another possible implementation, in the communication apparatus shown in FIG. 8, the processing unit 801 may be one or more logic circuits, and the transceiver unit 802 may be an input/output interface, or referred to as a communication interface, an interface circuit, an interface, or the like. Alternatively, the transceiver unit 802 may be a sending unit and a receiving unit. The sending unit may be an output interface, and the receiving unit may be an input interface. The sending unit and the receiving unit are integrated into one unit, for example, an input/output interface. As shown in FIG. 10, a communication apparatus shown in FIG. 10 includes a logic circuit 1001 and an interface 1002. In other words, the processing unit 801 may be implemented through the logic circuit 1001, and the transceiver unit 802 may be implemented through the interface 1002. The logic circuit 1001 may be a chip, a processing circuit, an integrated circuit, a system-on-a-chip (system-on-a-chip, SoC) chip, or the like. The interface 1002 may be a communication interface, an input/output interface, a pin, or the like. For example, FIG. 10 shows an example in which the communication apparatus is a chip. The chip includes the logic circuit 1001 and the interface 1002.

In this embodiment of this application, the logic circuit and the interface may be coupled to each other. A specific manner of connection between the logic circuit and the interface is not limited in this embodiment of this application.

In some embodiments of this application, the communication apparatus may be configured to perform steps, functions, or the like performed by the terminal device in the foregoing method embodiments. For example, the interface 1002 is configured to input a first broadcast message. The logic circuit 1001 is configured to input, through the interface 1002 based on first indication information, a second broadcast message.

In some other embodiments of this application, the communication apparatus may be configured to perform steps, functions, or the like performed by the first satellite in the foregoing method embodiments. For example, the logic circuit 1001 is configured to obtain ephemeris information of a second satellite. The interface 1002 is configured to output a first broadcast message. Optionally, the interface 1002 is further configured to input first information.

In still some other embodiments of this application, the communication apparatus may be configured to perform steps, functions, or the like performed by the second satellite in the foregoing method embodiments. For example, the interface 1002 is configured to output first information and a second broadcast message.

It may be understood that detailed descriptions of the logic circuit and the interface described in this embodiment of this application are merely examples. For specific functions, performed steps, or the like of the logic circuit and the interface, refer to the foregoing method embodiments. Details are not described herein again.

In the foregoing embodiments, for descriptions of the first satellite, the first broadcast message, the first indication information, the second satellite, the second broadcast message, the first information, and the like, refer to the descriptions in the foregoing method embodiments. Details are not described herein again.

It may be understood that the communication apparatus described in this embodiment of this application may implement the method provided in embodiments of this application in a form of hardware, or may implement the method provided in embodiments of this application in a form of software. This is not limited in embodiments of this application.

An embodiment of this application further provides a communication system. The communication system includes at least two of the following: a terminal device, a first satellite, and a second satellite. The terminal device, the first satellite, and the second satellite are configured to perform the method according to any one of the foregoing embodiments.

In addition, this application further provides a computer program. The computer program is for implementing an operation and/or processing performed by the terminal device in the method provided in this application.

This application further provides a computer program. The computer program is for implementing an operation and/or processing performed by the first satellite in the method provided in this application.

This application further provides a computer program. The computer program is for implementing an operation and/or processing performed by the second satellite in the method provided in this application.

This application further provides a computer-readable storage medium. The computer-readable storage medium stores computer code. When the computer code is run on a computer, the computer is caused to perform an operation and/or processing performed by the terminal device in the method provided in this application.

This application further provides a computer-readable storage medium. The computer-readable storage medium stores computer code. When the computer code is run on a computer, the computer is caused to perform an operation and/or processing performed by the first satellite in the method provided in this application.

This application further provides a computer-readable storage medium. The computer-readable storage medium stores computer code. When the computer code is run on a computer, the computer is caused to perform an operation and/or processing performed by the second satellite in the method provided in this application.

This application further provides a computer program product. The computer program product includes computer code or a computer program. When the computer code or the computer program is run on a computer, an operation and/or processing performed by the terminal device in the method provided in this application are/is performed.

This application further provides a computer program product. The computer program product includes computer code or a computer program. When the computer code or the computer program is run on a computer, an operation and/or processing performed by the first satellite in the method provided in this application are/is performed.

This application further provides a computer program product. The computer program product includes computer code or a computer program. When the computer code or the computer program is run on a computer, an operation and/or processing performed by the second satellite in the method provided in this application are/is performed.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected based on an actual requirement to implement the technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a readable storage medium and includes a plurality of instructions for instructing a computer device (which may be a personal computer, a server, or a network device, or the like) to perform all or a part of the steps of the methods described in embodiments of this application. The foregoing readable storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal apparatus, and comprising:
receiving a first broadcast message from a first satellite, wherein the first broadcast message comprises first indication information, and the first indication information indicates ephemeris information of a second satellite; and
receiving a second broadcast message from the second satellite based on the first indication information.

2. A communication method, applied to a first satellite, and comprising:
obtaining ephemeris information of a second satellite; and
sending a first broadcast message, wherein the first broadcast message comprises first indication information, and the first indication information indicates the ephemeris information of the second satellite.

3. The method according to claim 2, wherein the obtaining the ephemeris information of the second satellite comprises:
receiving first information from the second satellite, wherein the first information comprises the ephemeris information of the second satellite.

4. The method according to claim 3, wherein the first information further comprises at least one of the following: synchronization signal block SSB information of the second satellite, a coverage range of the second satellite, and a load status of the second satellite.

5. The method according to any one of claims 1 to 4, wherein the first broadcast message further comprises at least one of the following: the synchronization signal block SSB information of the second satellite, second indication information, or third indication information, wherein the second indication information indicates the coverage range of the second satellite, and the third indication information indicates the load status of the second satellite.

6. The method according to claim 5, wherein the second indication information indicates latitude and longitude corresponding to the coverage range of the second satellite.

7. The method according to claim 5, wherein the second indication information indicates an identifier of a geographical area corresponding to the coverage range of the second satellite.

8. The method according to claim 5, wherein the second indication information indicates a value range of an included angle formed between a beam emitted by the second satellite and a plane defined by an antenna panel of the second satellite.

9. The method according to claim 5, wherein the third indication information comprises a quantity of users currently connected to the second satellite and/or a ratio of the quantity of users currently connected to the second satellite to a quantity of users allowed to be connected to the second satellite.

10. The method according to claim 5, wherein the SSB information comprises at least one of the following information of the second satellite: an SSB center frequency, a subcarrier spacing SCS, a system frame number SFN offset, an SSB sending periodicity, SSB time domain information, and a half-frame index.

11. The method according to any one of claims 1 to 10, wherein the first indication information comprises ephemeris information of the first satellite and an offset of an ephemeris of the second satellite relative to an ephemeris of the first satellite.

12. The method according to any one of claims 1 to 11, wherein the first broadcast message further comprises fourth indication information, and the fourth indication information indicates that the first broadcast message further comprises access information of the first satellite.

13. The method according to any one of claims 1 to 12, wherein the first indication information indicates ephemeris information of a plurality of satellites, and the second satellite is one of the plurality of satellites that is closer to the terminal apparatus, or the second satellite is one of the plurality of satellites that has a distance to the terminal apparatus less than or equal to a distance threshold.

14. The method according to any one of claims 1 to 12, wherein the first indication information indicates ephemeris information of a plurality of satellites, and the second satellite is one of the plurality of satellites that has longer service duration, or the second satellite is one of the plurality of satellites that has service duration greater than or equal to a time threshold.

15. The method according to any one of claims 1 to 12, wherein the first indication information indicates ephemeris information of a plurality of satellites, and the second satellite is one of the plurality of satellites that has higher signal quality, or the second satellite is one of the plurality of satellites that has signal quality greater than or equal to a signal quality threshold.

16. A communication method, applied to a second satellite, and comprising:
sending first information to a first satellite, wherein the first information comprises ephemeris information of the second satellite; and
sending a second broadcast message.

17. The method according to claim 16, wherein the first information further comprises at least one of the following: synchronization signal block SSB information of the second satellite, a coverage range of the second satellite, and a load status of the second satellite.

18. A communication apparatus, comprising a unit configured to perform the method according to any one of claims 1 to 17.

19. A communication apparatus, comprising a processor and a memory, wherein
the memory is configured to store instructions; and
the processor is configured to execute the instructions, to cause the method according to any one of claims 1 to 17 to be performed.

20. A communication apparatus, comprising a logic circuit and an interface, wherein the logic circuit is coupled to the interface; and
the interface is configured to input and/or output code instructions, and the logic circuit is configured to execute the code instructions, to cause the method according to any one of claims 1 to 17 to be performed.

21. A computer-readable storage medium, wherein the computer-readable storage medium is configured to store a computer program, and when the computer program is executed, the method according to any one of claims 1 to 17 is performed.

22. A computer program, wherein when the computer program is executed, the method according to any one of claims 1 to 17 is performed.

23. A communication system, wherein the communication system comprises at least two of the following: a terminal apparatus, a first satellite, and a second satellite, the terminal apparatus is configured to perform the method according to any one of claim 1 and claims 5 to 15, the first satellite is configured to perform the method according to any one of claims 2 to 15, and the second satellite is configured to perform the method according to claim 16 or 17.
